# FASCICULE DE BREVET EUROPEEN

(11) **EP 3 667 309 B1**
(45) Date de publication et mention de la délivrance du brevet: **22.11.2023**
(21) Numéro de dépôt: 19214721.3
(22) Date de dépôt: 10.12.2019
(51) Int. Cl.: G01N 29/02, G01N 29/036

(54) **CAPTEUR DE FLUX THERMIQUE A FIL CHAUFFANT**
WÄRMEFLUSSSENSOR MIT HEIZDRAHT
THERMAL FLOW SENSOR WITH HEATING WIRE

(30) Priorité: 11.12.2018 FR 1872647
(43) Date de publication de la demande: 17.06.2020
(73) Titulaire: Commissariat à l'Energie Atomique et aux Energies Alternatives, 75015 Paris (FR); APIX Analytics, 38000 Grenoble (FR)
(72) Inventeur: OLLIER, Eric, 38054 GRENOBLE CEDEX 09 (FR); COLINET, Eric, 38330 Saint Ismier (FR)
(74) Mandataire: Regimbeau

(56) Documents cités:
- EP-A1- 2 711 696
- YU-HSIANG WANG ET AL: "MEMS-based gas flow sensors", MICROFLUIDICS AND NANOFLUIDICS, SPRINGER, BERLIN, DE, vol. 6, no. 3, 8 janvier 2009 (2009-01-08) , pages 333-346, XP019667839, ISSN: 1613-4990

## Description

### DOMAINE DE L'INVENTION

La présente invention concerne un capteur de flux thermique comprenant un fil chauffant. Un tel capteur de flux thermique peut trouver une application notamment dans un capteur de gaz, un système d'analyse de gaz ou un débitmètre.

### ETAT DE LA TECHNIQUE

Un capteur de flux thermique permet de mesurer un échange de chaleur entre le corps du capteur et le milieu environnant, qui peut être gazeux ou liquide. Une telle technologie de mesure peut être utilisée notamment pour réaliser un capteur de gaz ou un capteur de pression.

Un capteur de gaz de type TCD (acronyme du terme anglo-saxon « Thermal Conductivity Detector » ou « détecteur à conductivité thermique ») fonctionne sur le principe de la mesure de la résistance électrique d'un fil dont la température varie en fonction des échanges de chaleur avec un gaz environnant au travers de la conductivité thermique dudit gaz.

Un tel capteur peut être agencé à la sortie d'une colonne de chromatographie en phase gazeuse au travers de laquelle les différentes espèces constituant un mélange de gaz à analyser sont séparées.

Le capteur comprend un fil chauffant couplé à une source électrique permettant de le chauffer par effet Joule, suspendu dans un volume dans lequel se trouve une espèce à détecter.

Selon la nature de l'espèce en contact avec le fil chauffant, et plus précisément sa conductivité thermique, les échanges thermiques entre le fil chauffant et l'espèce sont susceptibles d'engendrer une variation de température du fil chauffant et par conséquent une variation de la résistance électrique du fil.

Ce changement de résistance électrique, ainsi que la résistance électrique d'un fil identique en contact avec un gaz de référence, sont mesurés à l'aide d'un pont de Wheatstone, en vue de déterminer la concentration de l'espèce considérée.

Cependant, cette technologie présente des limites en ce qu'elle nécessite un contraste important en termes de conductivité thermique entre le gaz de référence et la ou les espèce(s) à détecter.

Par ailleurs, le fil est généralement réalisé en platine enrobé par du nitrure, qui sont des matériaux présentant des niveaux de contraintes importants, induisant des difficultés de mise en oeuvre et des limites en termes de conception du capteur. Cette technologie est donc difficile à maîtriser en pratique.

Un autre type de capteur reposant sur le même principe de mesure a été réalisé sur substrat de silicium grâce à des techniques de microfabrication, permettant de graver le fil chauffant directement dans une couche de silicium. Ce type de capteur a été décrit dans les documents FR 2 995 691, FR 2 995 690 et FR 2 995 692). Cette technique présente un avantage en termes de facilité d'intégration.

En revanche, pour avoir une résistance électrique appropriée du fil de silicium, un tel capteur doit être réalisé à l'échelle nanométrique. Il en résulte que la surface d'échange thermique entre le fil chauffant et le gaz à détecter est très faible, ce qui limite lesdits échanges et la capacité du capteur à détecter de faibles concentrations de gaz.

D'autres capteurs reposent sur des technologies différentes.

Par exemple, le document WO 2015/082956 décrit un résonateur de type NEMS (acronyme du terme anglo-saxon « Nano Electro-Mechanical Systems ») permettant la mesure de la concentration de gaz par effet gravimétrique, c'est-à-dire la modification de la fréquence de résonance du résonateur due à une modification de la masse de la structure résonante.

Quelle que soit la technologie considérée, des améliorations sont attendues en termes de sensibilité du capteur et de simplicité de fabrication.

### EXPOSE DE L'INVENTION

Un but de l'invention est de concevoir un capteur de flux thermique qui soit simple à fabriquer tout en assurant une bonne sensibilité de détection.

A cet effet, l'invention propose un capteur de flux thermique comprenant :
- un fil chauffant présentant une longueur comprise entre 1 et 500 µm et une dimension transversale comprise entre 1 et 50 µm, ledit fil chauffant comprenant un matériau apte à être porté à une température déterminée par effet Joule, ledit fil étant adapté pour être connecté à une source électrique,
- un résonateur de type nanosystème électromécanique (NEMS) comprenant :
   * une poutre suspendue par rapport à un support,
   * un dispositif d'actionnement apte à générer une vibration de ladite poutre sous l'effet d'un signal d'excitation,
   * un dispositif de détection configuré pour mesurer un déplacement de ladite poutre au cours de ladite vibration et émettre un signal de sortie présentant une résonance à la fréquence de résonance du résonateur, ladite fréquence de résonance dépendant de la température de la poutre,
dans lequel une extrémité de la poutre est solidaire du fil chauffant de sorte à permettre une conduction de chaleur du fil chauffant vers la poutre, une variation de température du fil chauffant induite par une variation d'une caractéristique d'un fluide environnant ledit fil provoquant une variation de la fréquence de résonance du résonateur.

Un tel capteur repose sur le fait que la fréquence de résonance du résonateur dépend fortement de sa température. Le résonateur est donc en mesure de détecter une variation de température du fil chauffant sous l'effet d'une variation d'une caractéristique (par exemple la composition) d'un fluide environnant ledit fil chauffant.

Ce capteur présente l'avantage de découpler la partie chauffée de la partie de mesure, ce qui permet d'optimiser chacune des deux indépendamment de l'autre. Notamment, chaque partie peut être réalisée à une échelle différente : le fil chauffant à une échelle micrométrique pour bénéficier d'une surface d'échange thermique avec le gaz environnant suffisamment grande ; le résonateur à une échelle nanométrique pour bénéficier de la précision de mesure.

De manière avantageuse, le fil chauffant est encastré à ses deux extrémités dans le support.

Selon un mode de réalisation, le fil chauffant présente au moins une zone d'encastrement dans le support, à distance de ses deux extrémités.

Selon un mode de réalisation, le fil chauffant comprend une pluralité de tronçons coplanaires inclinés les uns par rapport aux autres.

Selon un mode de réalisation, le fil chauffant comprend un matériau semiconducteur, tel que du silicium, ou un métal, tel que du platine, éventuellement enrobé d'un autre matériau.

De préférence, le fil chauffant présente une épaisseur égale ou supérieure à l'épaisseur de la poutre du résonateur.

Selon un mode de réalisation, le fil chauffant comprend des ouvertures traversantes réparties au moins une partie de sa surface.

Selon une forme d'exécution particulière, le fil chauffant se présente sous la forme d'un réseau de nanofilaments parallèles les uns aux autres.

La poutre présente typiquement une longueur comprise entre 1 et 100 µm et une dimension transversale comprise entre 10 et 500 nm.

Selon un mode de réalisation préféré, la poutre est formée d'un matériau semiconducteur, tel que du silicium.

Selon un mode de réalisation, la poutre et le fil chauffant sont réalisés d'un seul tenant en un même matériau semiconducteur. Le fil chauffant peut alors présenter un niveau de dopage tel que la résistance électrique du fil soit supérieure à celle de la poutre.

Le dispositif d'actionnement peut être de type électrostatique.

Le dispositif de détection peut comprendre des jauges piézorésistives.

De manière avantageuse, la poutre s'étend transversalement au fil chauffant, de préférence perpendiculairement à une direction principale dudit fil chauffant.

Selon un mode de réalisation, la surface de jonction entre la poutre et le fil chauffant est comprise entre 1000 et 100000 nm².

De manière avantageuse, la section et le matériau de la poutre et du fil chauffant sont choisis de telle sorte que la résistance électrique de la poutre soit supérieure à celle du fil chauffant.

Selon un mode de réalisation, la jonction entre la poutre et le fil chauffant se situe dans une région centrale du fil chauffant.

L'invention concerne également un capteur de gaz comprenant un capteur de flux thermique tel que décrit ci-dessus.

L'invention concerne également un système d'analyse de gaz comprenant une colonne de chromatographie et au moins un capteur de flux thermique tel que décrit ci-dessus agencé en sortie de ladite colonne de chromatographie.

L'invention concerne également un débitmètre comprenant un capteur de flux thermique tel que décrit ci-dessus.

### DESCRIPTION DES FIGURES

D'autres caractéristiques et avantages de l'invention ressortiront de la description détaillée qui va suivre, en référence aux dessins annexés sur lesquels :
- la figure 1 est un schéma de principe d'un capteur selon l'invention ;
- la figure 2 est un schéma d'un capteur selon un premier mode de réalisation de l'invention ;
- la figure 3 est un schéma d'un capteur selon un deuxième mode de réalisation de l'invention ;
- la figure 4 est un schéma d'un capteur selon un troisième mode de réalisation de l'invention ;
- la figure 5 est un schéma d'un capteur selon un quatrième mode de réalisation de l'invention ;
- la figure 6 est un schéma d'un capteur selon un cinquième mode de réalisation de l'invention ;
- la figure 7A représente une première configuration de la jonction entre le fil chauffant et la poutre pour contrôler la quantité de chaleur prélevée du fil chauffant vers le résonateur ;
- la figure 7B représente une deuxième configuration de la jonction entre le fil chauffant et la poutre pour contrôler la quantité de chaleur prélevée du fil chauffant vers le résonateur ;
- la figure 7C représente une troisième configuration de la jonction entre le fil chauffant et la poutre pour contrôler la quantité de chaleur prélevée du fil chauffant vers le résonateur.

Les signes de référence identiques d'une figure à l'autre identifient des éléments identiques ou remplissant la même fonction.

Pour des raisons de lisibilité des figures, les différents éléments du capteur ne sont pas nécessairement représentés à l'échelle.

### DESCRIPTION DETAILLEE DE MODES DE REALISATION DE L'INVENTION

Le capteur de flux thermique comprend un fil chauffant, qui est destiné à être mis en contact avec un fluide et à échanger de la chaleur avec ledit fluide pour permettre d'en mesurer une caractéristique.

Le fil chauffant est formé d'un matériau électriquement conducteur présentant une résistivité électrique déterminée ou d'un matériau semiconducteur ; il est connecté à une source électrique pour porter ledit fil à une température déterminée par effet Joule. Le fil chauffant est solidaire d'un support.

Pour optimiser la sensibilité du capteur, le fil chauffant est conçu pour permettre un échange maximal de chaleur avec le fluide environnant et limiter au maximum la perte de chaleur avec son support. Le fil chauffant est donc avantageusement suspendu par rapport à son support, c'est-à-dire qu'un espace libre est ménagé entre le fil chauffant et le support pour permettre au fluide d'entourer le fil chauffant sur toutes ses faces et de maximiser la surface de contact entre le fluide et le fil chauffant.

Ainsi, dans le cas de l'application à un capteur de gaz, une modification de la composition du gaz environnant le capteur modifie les échanges de chaleur entre le fil et le gaz, et fait donc varier la température du fil chauffant ; la mesure de cette température permet d'en déduire la composition du gaz. Dans le cas de l'application à un débitmètre, une variation de vitesse d'un flux de gaz environnant le capteur modifie les échanges de chaleur entre le fil et le gaz et fait donc également varier la température du fil.

La fonction de mesure de la température du fil chauffant est remplie par un résonateur de type nanosystème électromécanique (NEMS).

De manière connue en elle-même, un tel résonateur NEMS comprend une poutre suspendue par rapport à un support, un dispositif d'actionnement apte à générer une vibration de ladite poutre sous l'effet d'un signal d'excitation, et un dispositif de détection configuré pour mesurer un déplacement de ladite poutre au cours de ladite vibration et émettre un signal de sortie présentant une résonance à la fréquence de résonance du résonateur, ladite fréquence de résonance dépendant de la température de la poutre.

Selon un mode de réalisation préféré, le dispositif d'actionnement est de type électrostatique. Dans ce cas, le dispositif d'actionnement comprend deux électrodes situées de part et d'autre de la poutre, à distance de celle-ci. Cette distance est de l'ordre de quelques centaines de nm. La fréquence de résonance du résonateur est typiquement de l'ordre de 1 à 100 MHz.

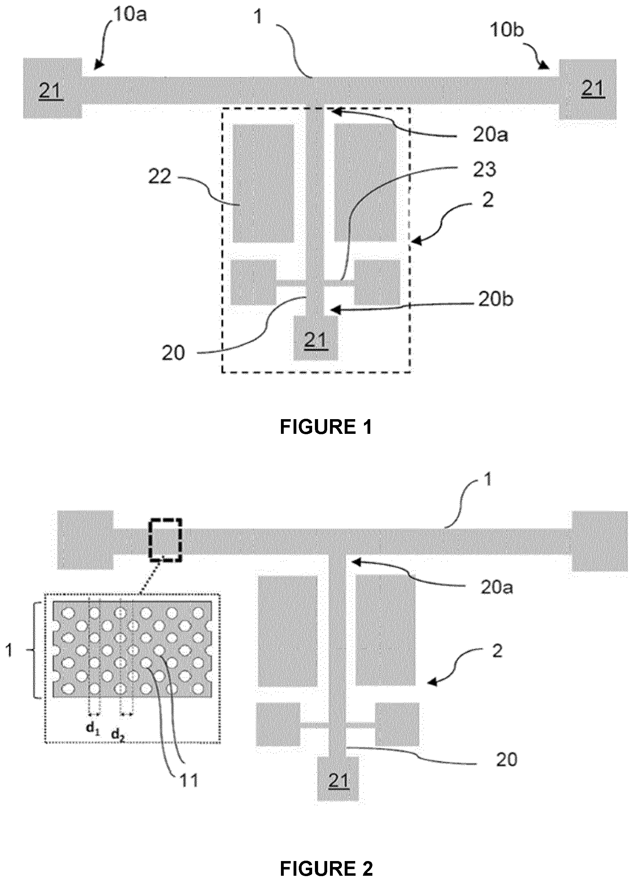

Selon un mode de réalisation préféré, le dispositif de détection est de type piézorésistif, comme décrit dans le document FR 2 996 219. Dans ce cas deux jauges de contrainte piézorésistives (référencées 23 sur les figures 1 à 6) sont positionnées de part et d'autre de la poutre, à distance de ses deux extrémités. Les dimensions de ces jauges sont typiquement de quelques dizaines à quelques centaines de nm de largeur et d'épaisseur et quelques centaines de nm à quelques µm de long. Cependant, l'homme du métier pourrait choisir tout autre type de détection, par exemple capacitive, piézoélectrique, magnétique, optique, etc.

Une extrémité de la poutre est solidaire du fil chauffant de sorte à permettre une conduction de chaleur du fil chauffant vers la poutre. Ainsi, une variation de température du fil chauffant induite par une variation d'une caractéristique du fluide environnant ledit fil (par exemple, une variation de la composition du gaz dans le cas d'un capteur de gaz) provoque une variation de la fréquence de résonance du résonateur qui est mesurée par le dispositif de détection. La jonction entre la poutre et le fil chauffant est avantageusement réalisée dans la région la plus chaude du fil chauffant, qui est généralement la portion centrale du fil chauffant. Par exemple, la jonction peut être réalisée dans le tiers central du fil chauffant.

Cependant, pour ne pas dégrader la performance du fil chauffant, la quantité de chaleur prélevée par le résonateur à sa jonction avec le fil chauffant doit être limitée.

Pour permettre à la fois de maximiser l'échange de chaleur du fil chauffant avec le fluide environnant, de maximiser la sensibilité du résonateur à la température et de minimiser l'échange de chaleur et le passage de courant électrique entre le fil chauffant et la poutre du résonateur, ces deux composants sont avantageusement réalisés à des échelles différentes. Ainsi, alors que le résonateur est réalisé à l'échelle nanoscopique (les dimensions typiques de la poutre étant de quelques dizaines à quelques centaines de nanomètres de côté et quelques micromètres de long), le fil chauffant est réalisé à l'échelle microscopique (les dimensions caractéristiques du fil étant de quelques micromètres à quelques dizaines de micromètres de côté et quelques millimètres de long).

De manière particulièrement avantageuse, le fil chauffant est encastré à ses deux extrémités dans le support. Pour minimiser l'effet de la perte de chaleur au niveau des encastrements, le fil est avantageusement conçu relativement long par rapport à sa section de contact avec les encastrements. Pour réduire le risque de flambage ou de déformation incontrôlée du fil chauffant (pouvant conduire éventuellement à sa rupture) sous l'effet d'une contrainte de compression, il est possible d'y intégrer une ou plusieurs zones d'encastrement dans le support, à distance des deux extrémités. Il est également possible d'augmenter la longueur du fil chauffant tout en relâchant d'éventuelles contraintes de compression, en formant un fil non rectiligne mais présentant une pluralité de tronçons agencés dans un même plan parallèle au support mais présentant une orientation et/ou une courbure différente les uns par rapport aux autres. Par exemple, le fil peut présenter une forme de serpentin.

Selon un mode de réalisation, le fil chauffant présente une longueur comprise entre 1 et 500 µm et et des dimensions transversales (largeur et hauteur) comprises entre 1 et 50 µm. La poutre présente quant à elle une longueur comprise entre 1 et 100 µm et une dimension transversale (largeur et/ou hauteur) comprise entre 10 et 500 nm.

Le fil chauffant et le résonateur peuvent être chacun constitués d'un matériau semiconducteur, tel que du silicium (monocristallin ou polycristallin, dopé ou non), du germanium, du silicium-germanium (SiGe). Eventuellement, le silicium peut être poreux, la porosité permettant d'augmenter les échanges thermiques avec le milieu environnant.

De manière avantageuse, le fil chauffant et le résonateur sont formés d'un seul tenant dans un même matériau, éventuellement avec des niveaux de dopage différents choisis de sorte que la résistance électrique du fil chauffant soit supérieure à celle de la poutre.

De manière alternative, le fil chauffant peut être un fil métallique, par exemple de platine, éventuellement enrobé d'une couche de protection, par exemple une couche de nitrure de silicium.

Selon un mode de réalisation, la poutre peut être recouverte d'une couche fonctionnelle. Ainsi, dans l'application à un capteur de gaz, la fréquence de résonance du résonateur est sensible à l'adsorption et à la désorption d'espèces chimiques et permet donc une détection gravimétrique des espèces contenues dans le gaz. Le capteur est donc ainsi plus polyvalent. La détection gravimétrique peut être éventuellement favorisée en ne chauffant pas le fil.

Pour la fabrication de ce capteur, on pourra se référer aux documents FR 2 995 690 et FR 3 008 690 qui décrivent respectivement un procédé de fabrication d'un fil chauffant et un procédé de fabrication d'un résonateur NEMS.

Un procédé de fabrication préféré est basé sur un substrat semiconducteur sur isolant (SOI, acronyme du terme anglo-saxon « Semiconductor on insulator »). Un tel substrat SOI comprend successivement, à partir de sa surface, une couche mince de silicium monocristallin (de quelques centaines de nanomètres d'épaisseur), une couche diélectrique enterrée (par exemple une couche d'oxyde de silicium (SiO₂) et un substrat de base, par exemple en silicium, qui sert de support mécanique au capteur.

Ce procédé met en oeuvre des techniques classiques de la microélectronique, en particulier des techniques de photolithographie, d'implantation, de dépôt et de gravure.

On implante dans la couche mince de silicium des espèces choisies pour obtenir la résistivité électrique souhaitée dans les zones destinées à former respectivement le fil chauffant et le résonateur (poutre, jauges de contrainte, électrodes d'actionnement). Ces résistivités électriques peuvent éventuellement être différentes entre ces deux zones.

On grave ensuite de manière anisotrope les structures mécaniques (fil chauffant, résonateur (poutre, jauges de contrainte, électrodes d'actionnement), encastrements, etc.) dans la couche mince de silicium superficielle. Le fil chauffant et le résonateur sont donc formés d'un seul tenant dans ladite couche mince, et présentent ainsi la même épaisseur. Les encastrements sont avantageusement réalisés suffisamment grands pour assurer une bonne tenue mécanique vis-à-vis du support après la libération des structures mécaniques. Les encastrements présentent ainsi typiquement des côtés de plusieurs µm à plusieurs dizaines de µm.

Puis, par des étapes de dépôts et de gravures successives de couches électriquement isolantes (SiO₂) et de couches électriquement conductrices (AISi de préférence pour les interconnexions), on réalise les interconnections métalliques entre les structures mécaniques en silicium dopé.

On peut éventuellement ensuite former une couche planarisante de façon à faciliter l'étape ultérieure de packaging des composants par report d'un capot.

Après avoir ouvert localement (par une gravure anisotrope) cette couche planarisante au-dessus des structures mécaniques destinées à être libérées, on réalise une gravure isotrope de la couche d'oxyde de silicium enterrée du substrat SOI pour libérer les structures mécaniques en silicium destinées à être suspendues (fil chauffant, résonateur) par rapport au substrat de base. La couche d'oxyde n'est en revanche pas gravée - ou est seulement partiellement gravée - au niveau des encastrements.

On peut alors reporter au-dessus de cette structure un capot comportant un canal gravé, créant ainsi un canal fluidique dans lequel va circuler le mélange gazeux destiné à être analysé.

Ledit canal peut être relié fluidiquement à la sortie d'une colonne de chromatographie gazeuse si une telle colonne est mise en oeuvre en amont du capteur pour séparer et identifier les composés du mélange gazeux.

De manière alternative, le capteur peut être utilisé comme un débitmètre pour mesurer un débit de gaz.

Naturellement, l'homme du métier pourra choisir tout autre procédé de fabrication sans pour autant sortir du cadre de la présente invention.

La figure 1 est un schéma de principe d'un capteur de flux thermique selon un mode de réalisation de l'invention.

Le capteur comprend un fil chauffant 1 qui est encastré dans un support 21 à ses deux extrémités 10a, 10b.

Le capteur comprend en outre un résonateur NEMS 2.

Le résonateur comprend une poutre 20 qui est suspendue par rapport à un support (ledit support peut être le même que celui du fil chauffant). La poutre 20 présente une extrémité 20a solidaire du fil chauffant, et une extrémité 20b encastrée dans le support 21. La poutre et le fil chauffant s'étendent dans un plan qui est généralement parallèle au plan du support.

De manière avantageuse, la poutre est agencée perpendiculairement au fil chauffant, mais d'une manière plus générale la poutre peut être agencée transversalement au fil chauffant, avec un angle compris entre 10° et 90° entre la poutre et le fil chauffant.

La figure 2 illustre un mode de réalisation particulier du capteur, dans lequel le fil chauffant comprend des ouvertures 11 traversantes réparties sur au moins une partie de sa surface. Ces ouvertures peuvent servir lors du procédé de fabrication du capteur, pour faciliter la gravure du support sous le fil chauffant en vue de libérer le fil chauffant et le suspendre par rapport au support. De telles ouvertures sont en général absentes au niveau des encastrements. Dans l'exemple illustré, chaque ouverture présente un diamètre d₁ de l'ordre de 0,5 µm et est séparée d'une ouverture adjacente d'une distance d₂ de l'ordre de 2 µm. Même si la figure 2 illustre des ouvertures de taille identique et réparties de manière régulière sur la surface du fil, il est également envisageable de faire varier le diamètre des ouvertures et/ou leur densité de répartition afin d'ajuster localement la résistance électrique du fil chauffant pour privilégier un échauffement dans une région déterminée du fil.

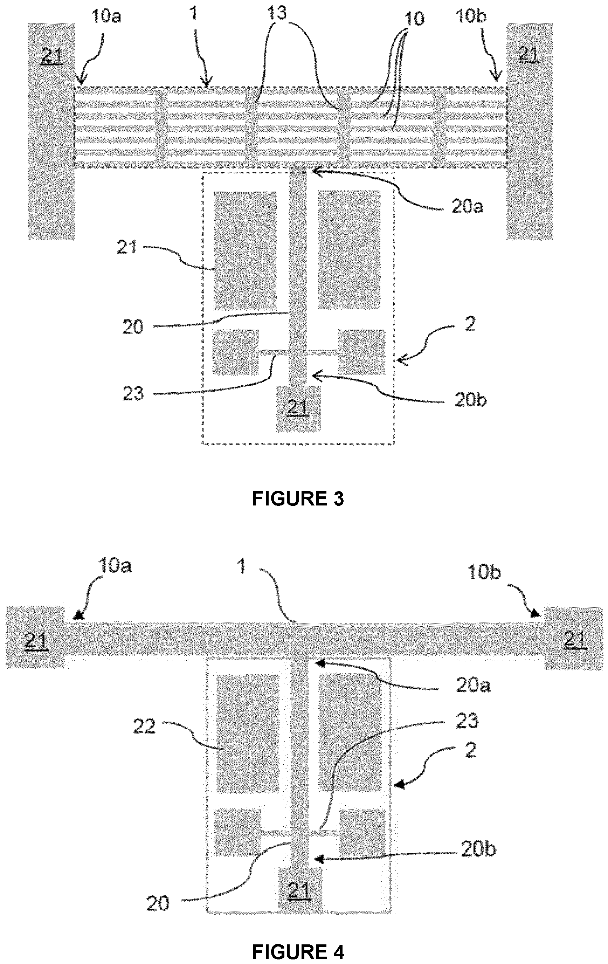

Selon une autre forme d'exécution, illustrée sur la figure 3, le fil chauffant 1 peut se présenter sous la forme d'un réseau de nanofilaments 10 parallèles les uns aux autres dans un plan parallèle au support, la poutre 20 du résonateur étant solidaire d'un nanofilament situé sur un côté dudit réseau. Lesdits nanofilaments 10 sont reliés mécaniquement entre eux par des pontets 13 qui procurent également une liaison thermique entre les nanofilaments. La section de chaque nanofilament présente typiquement une largeur et une épaisseur comprises chacune entre 10 et 500 nm. L'écartement entre deux filaments adjacents peut être de 10 à 500 nm, voire de l'ordre du µm. L'ensemble desdits nanofilaments peut donc être assimilé à un fil chauffant d'un seul tenant tel que décrit plus haut. En outre, en réduisant la surface de contact entre le fil chauffant et le support dans lequel les nanofilaments sont encastrés, lesdits nanofilaments permettent de réduire les pertes thermiques au niveau des encastrements.

La figure 4 illustre un mode de réalisation dans lequel le fil chauffant et le résonateur sont tous les deux réalisés en un matériau semiconducteur, tel que du silicium. Le fil chauffant 1 et le résonateur 2 sont dopés avec des niveaux de dopage différents, les deux zones de dopage étant délimitées par deux rectangles. Plus précisément, le fil chauffant présente un niveau de dopage tel que la résistance électrique du fil est supérieure à celle de la poutre. Le niveau de dopage de la poutre est également choisi en combinaison avec la section de la poutre, pour éviter que le courant électrique qui circule dans le fil chauffant ne passe dans la poutre.

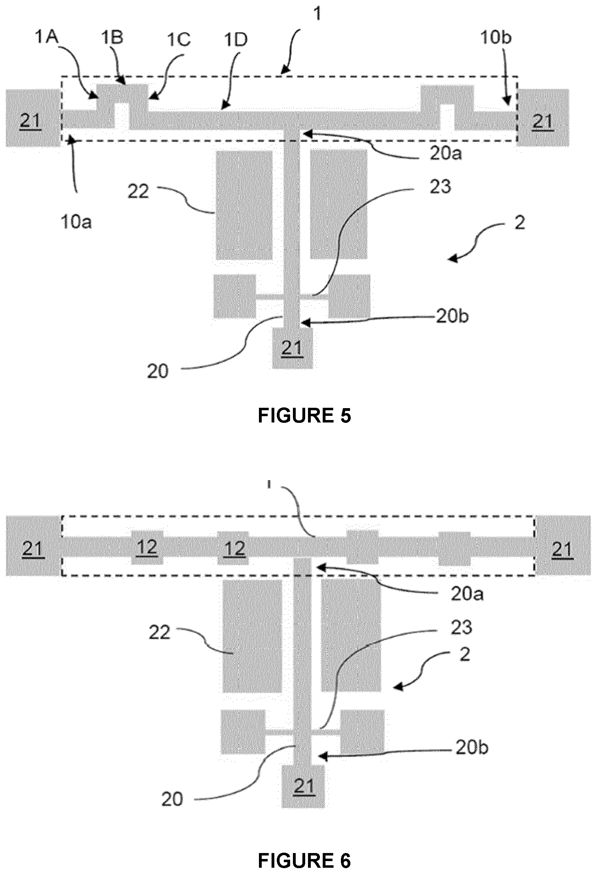

La figure 5 illustre un mode de réalisation dans lequel le fil chauffant n'est pas rectiligne mais présente des portions présentant des orientations différentes. Par exemple, le filament présente une portion centrale rectiligne 1D, à laquelle la poutre du résonateur est connectée. La portion centrale rectiligne 1D est reliée à chaque encastrement par une portion présentant une forme générale de U, avec deux tronçons 1A, 1C perpendiculaires à la portion 1D reliées par un tronçon 1B perpendiculaire aux tronçons 1A, 1C, les tronçons 1A, 1B et 1C s'étendant dans le même plan que la portion 1D. Pour un même écartement entre les deux extrémités encastrées dans le support 21, la longueur du fil est donc plus grande qu'un fil rectiligne, mais présente néanmoins une résistance au flambage suffisante. Naturellement, l'homme du métier pourrait ajouter d'autres tronçons permettant d'augmenter la longueur du fil et sa tenue au flambage et/ou choisir d'autres orientations des tronçons (par exemple inclinés entre eux d'un angle non droit). Par ailleurs, les tronçons ne sont pas nécessairement rectilignes mais pourraient présenter une certaine courbure.

La figure 6 illustre un mode de réalisation dans lequel le fil chauffant est encastré dans le support 21 non seulement à ses deux extrémités mais aussi en plusieurs autres zones 12. Ces encastrements additionnels permettent de rigidifier le fil chauffant et d'augmenter sa tenue au flambage.

Les différents modes de réalisation décrits précédemment peuvent éventuellement être combinés.

Par ailleurs, bien que la poutre soit représentée encastrée dans le support au niveau de son extrémité 20b opposée au fil chauffant, elle pourrait avantageusement être libre au niveau de cette extrémité 20b, afin d'éviter toute déperdition de chaleur au niveau de cette extrémité.

Sur les figures 1 à 6, la poutre est représentée avec une section constante sur toute sa longueur. Cependant, il est possible d'adapter la géométrie de l'extrémité de la poutre assurant la jonction avec le fil chauffant, afin de contrôler la quantité de chaleur prélevée du fil chauffant vers le résonateur. La surface de jonction entre la poutre et le fil chauffant est typiquement comprise entre 1000 et 100000 nm².

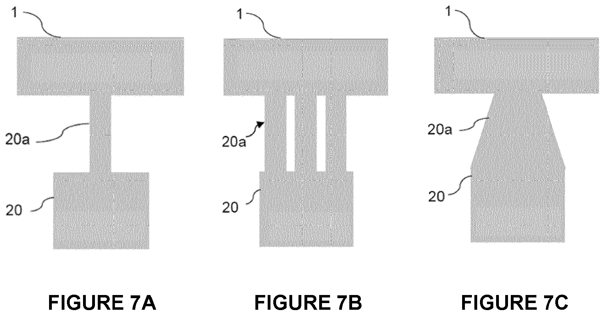

Les figures 7A à 7C illustrent ainsi différentes configurations de la jonction entre le fil chauffant et la poutre permettant, pour une même section de la poutre et du fil chauffant, de réduire la surface de contact entre le fil chauffant et la poutre afin de réduire la quantité de chaleur prélevée par la poutre et de minimiser le passage du courant électrique dans la poutre. Dans le cas de la figure 7A, l'extrémité 20a de la poutre 20 présente une forme rectiligne de section inférieure à celle du reste de la poutre. Dans le cas de la figure 7B, l'extrémité 20a de la poutre 20 est constituée d'une pluralité de segments parallèles dont la section totale est inférieure à la section du reste de la poutre. Dans le cas de la figure 7C, l'extrémité 20a de la poutre 20 présente une section qui diminue progressivement en direction du fil chauffant.

Les figures 7A à 7C ne sont que des exemples de configurations et l'homme du métier pourrait choisir toute autre forme de l'extrémité de la poutre pour remplir la fonction souhaitée sans pour autant sortir du cadre de la présente invention.

Les configurations illustrées sur les figures 7A à 7C peuvent être combinées avec les modes de réalisation des figures 1 à 6.

### REFERENCES

FR 2 995 691
FR 2 995 690
FR 2 995 692
WO 2015/082956
FR 2 996 219
FR 3 008 690

## Revendications

1. Capteur de flux thermique comprenant :
- un fil chauffant (1), ledit fil chauffant (1) comprenant un matériau apte à être porté à une température déterminée par effet Joule, adapté pour être connecté à une source électrique,
- un résonateur (2) de type nanosystème électromécanique (NEMS) comprenant :
* une poutre (20) suspendue par rapport à un support (21),
* un dispositif (22) d'actionnement apte à générer une vibration de ladite poutre sous l'effet d'un signal d'excitation,
* un dispositif de détection configuré pour mesurer un déplacement de ladite poutre au cours de ladite vibration et émettre un signal de sortie présentant une résonance à la fréquence de résonance du résonateur, ladite fréquence de résonance dépendant de la température de la poutre,
dans lequel une extrémité (20a) de la poutre (20) est solidaire du fil chauffant (1) de sorte à permettre une conduction de chaleur du fil chauffant vers la poutre, une variation de température du fil chauffant induite par une variation d'une caractéristique d'un fluide environnant ledit fil provoquant une variation de la fréquence de résonance du résonateur, **caractérisé en ce que** le fil chauffant présente une longueur comprise entre 1 et 500 µm et une dimension transversale comprise entre 1 et 50 µm.

2. Capteur selon la revendication 1, dans lequel le fil chauffant (1) est encastré à ses deux extrémités (10a, 10b) dans le support (21).

3. Capteur selon l'une des revendications 1 à 2, dans lequel le fil chauffant (1) présente au moins une zone (12) d'encastrement dans le support (21), à distance de ses deux extrémités.

4. Capteur selon l'une des revendications 1 à 3, dans lequel le fil chauffant (1) comprend une pluralité de tronçons (1A-1D) coplanaires inclinés les uns par rapport aux autres.

5. Capteur selon l'une des revendications 1 à 4, dans lequel le fil chauffant (1) comprend un matériau semiconducteur, tel que du silicium, ou un métal, tel que du platine.

6. Capteur selon l'une des revendications 1 à 5, dans lequel le fil chauffant (1) présente une épaisseur égale ou supérieure à l'épaisseur de la poutre (20) du résonateur.

7. Capteur selon l'une des revendications 1 à 6, dans lequel le fil chauffant (1) comprend des ouvertures (11) traversantes réparties au moins une partie de sa surface.

8. Capteur selon l'une des revendications 1 à 7, dans lequel le fil chauffant (1) se présente sous la forme d'un réseau de nanofilaments (10) parallèles les uns aux autres.

9. Capteur selon l'une des revendications 1 à 8, dans lequel la poutre (20) présente une longueur comprise entre 1 et 100 µm et une dimension transversale comprise entre 10 et 500 nm.

10. Capteur selon l'une des revendications 1 à 9, dans lequel la poutre (20) est formée d'un matériau semiconducteur, tel que du silicium.

11. Capteur selon la combinaison des revendications 5 et 10, dans lequel la poutre (20) et le fil chauffant (1) sont réalisés d'un seul tenant en un même matériau semiconducteur.

12. Capteur selon la revendication 11, dans lequel le fil chauffant (1) présente un niveau de dopage tel que la résistance électrique du fil (1) soit supérieure à celle de la poutre (20).

13. Capteur selon l'une des revendications 1 à 12, dans lequel le dispositif d'actionnement (22) est de type électrostatique.

14. Capteur selon l'une des revendications 1 à 13, dans lequel le dispositif de détection comprend des jauges piézorésistives (23).

15. Capteur selon l'une des revendications 1 à 14, dans lequel la poutre (20) s'étend transversalement au fil chauffant (1).

16. Capteur selon l'une des revendications 1 à 15, dans laquelle la surface de jonction entre la poutre (20) et le fil chauffant (1) est comprise entre 1000 et 100000 nm².

17. Capteur selon l'une des revendications 1 à 16, dans lequel la section et le matériau de la poutre (20) et du fil chauffant (1) sont choisis de telle sorte que la résistance électrique de la poutre (20) soit supérieure à celle du fil chauffant (1).

18. Capteur selon l'une des revendications 1 à 17, dans lequel la jonction entre la poutre (20) et le fil chauffant (1) se situe dans une région centrale du fil chauffant (1).

19. Capteur de gaz comprenant au moins un capteur de flux thermique selon l'une des revendications 1 à 18.

20. Système d'analyse de gaz comprenant une colonne de chromatographie et au moins un capteur de flux thermique selon l'une des revendications 1 à 18 agencé en sortie de ladite colonne de chromatographie.

21. Débitmètre comprenant un capteur de flux thermique selon l'une des revendications 1 à 18.

## Patentansprüche

1. Wärmeflusssensor, umfassend:
- einen Heizdraht (1), der geeignet ist, mit einer Stromquelle verbunden zu werden, wobei der Heizdraht (1) ein Material umfasst, das geeignet ist, durch Joule-Effekt auf eine bestimmte Temperatur gebracht zu werden,
- einen Resonator (2) vom Typ elektromechanisches Nanosystem (NEMS), der umfasst:
* einen Balken (20), der im Bezug auf einen Halter (21) aufgehängt ist,
* eine Betätigungsvorrichtung (22), die in der Lage ist, durch ein Anregungssignal eine Vibration des Balkens zu erzeugen,
* eine Detektionsvorrichtung, die dazu ausgelegt ist, eine Bewegung des Balkens während der Vibration zu messen und ein Ausgangssignal zu senden, das eine Resonanz in der Resonanzfrequenz des Resonators aufweist, wobei die Resonanzfrequenz von der Temperatur des Balkens abhängt,
wobei ein Ende (20a) des Balkens (20) mit dem Heizdraht (1) fest verbunden ist, so dass eine Wärmeleitung vom Heizdraht zum Balken möglich ist, wobei eine durch eine Änderung einer Eigenschaft eines Fluids, das den Draht umgibt, induzierte Temperaturänderung des Heizdrahtes eine Änderung der Resonanzfrequenz des Resonators bewirkt, **dadurch gekennzeichnet, dass** der Heizdraht eine Länge zwischen 1 und 500 µm und eine Querabmessung zwischen 1 und 50 µm aufweist.

2. Sensor nach Anspruch 1, wobei der Heizdraht (1) an seinen beiden Enden (10a, 10b) in den Halter (21) eingebettet ist.

3. Sensor nach einem der Ansprüche 1 bis 2, wobei der Heizdraht (1) beabstandet von seinen beiden Enden wenigstens einen Einbettungsbereich (12) in den Halter (21) aufweist.

4. Sensor nach einem der Ansprüche 1 bis 3, wobei der Heizdraht (1) eine Vielzahl koplanarer, zueinander geneigte Abschnitte (1A-1D) umfasst.

5. Sensor nach einem der Ansprüche 1 bis 4, wobei der Heizdraht (1) ein Halbleitermaterial wie Silizium oder ein Metall wie Platin umfasst.

6. Sensor nach einem der Ansprüche 1 bis 5, wobei der Heizdraht (1) eine Dicke aufweist, die gleich oder größer als die Dicke des Balkens (20) des Resonators ist.

7. Sensor nach einem der Ansprüche 1 bis 6, wobei der Heizdraht (1) Durchgangsöffnungen (11) umfasst, die auf wenigstens einem Teil seiner Oberfläche verteilt sind.

8. Sensor nach einem der Ansprüche 1 bis 7, wobei der Heizdraht (1) in Form eines Netzwerks von parallel zueinander liegenden Nanofilamenten (10) vorliegt.

9. Sensor nach einem der Ansprüche 1 bis 8, wobei der Balken (20) eine Länge zwischen 1 und 100 µm und eine Querabmessung zwischen 10 und 500 nm aufweist.

10. Sensor nach einem der Ansprüche 1 bis 9, wobei der Balken (20) aus einem Halbleitermaterial wie Silizium gebildet ist.

11. Sensor nach der Kombination der Ansprüche 5 und 10, wobei der Balken (20) und der Heizdraht (1) in einem Stück aus demselben Halbleitermaterial hergestellt sind.

12. Sensor nach Anspruch 11, wobei der Heizdraht (1) ein Dotierungsniveau aufweist, so dass der elektrische Widerstand des Drahtes (1) größer als der des Balkens (20) ist.

13. Sensor nach einem der Ansprüche 1 bis 12, wobei die Betätigungsvorrichtung (22) vom Typ elektrostatisch ist.

14. Sensor nach einem der Ansprüche 1 bis 13, wobei die Detektionsvorrichtung ein piezoresistive Anzeigevorrichtung (23) umfasst.

15. Sensor nach einem der Ansprüche 1 bis 14, wobei sich der Balken (20) quer zum Heizdraht (1) erstreckt.

16. Sensor nach einem der Ansprüche 1 bis 15, wobei die Verbindungsfläche zwischen dem Balken (20) und dem Heizdraht (1) zwischen 1000 und 100000 nm² liegt.

17. Sensor nach einem der Ansprüche 1 bis 16, wobei der Querschnitt und das Material des Balkens (20) und des Heizdrahtes (1) so gewählt sind, dass der elektrische Widerstand des Balkens (20) größer als der des Heizdrahtes (1) ist.

18. Sensor nach einem der Ansprüche 1 bis 17, wobei sich die Verbindung zwischen dem Balken (20) und dem Heizdraht (1) in einer zentralen Region des Heizdrahtes (1) befindet.

19. Gassensor, der wenigstens einen Wärmeflusssensor nach einem der Ansprüche 1 bis 18 umfasst.

20. Gasanalysesystem, das eine Chromatographiesäule und wenigstens einen Wärmeflusssensor nach einem der Ansprüche 1 bis 18 umfasst, der am Ausgang der Chromatographiesäule angeordnet ist.

21. Durchflussmesser, der einen Wärmeflusssensor nach einem der Ansprüche 1 bis 18 umfasst.

## Claims

1. Heat flow sensor comprising :
- a heating wire (1), said heating wire (1) comprising a material capable of being heated to a specific temperature by the Joule effect, adapted to be connected to an electrical source,
- a nano-electromechanical system (NEMS) resonator (2) comprising :
- a beam (20) suspended from a support (21),
- an actuating device (22) capable of generating a vibration of said beam under the effect of an excitation signal,
- a detection device configured to measure a displacement of said beam during said vibration and emit an output signal having a resonance at the resonance frequency of the resonator, said resonance frequency depending on the beam temperature,
wherein one end (20a) of the beam (20) is integral with the heating wire (1) so as to enable heat conduction from the heating wire to the beam, a variation in temperature of the heating wire induced by a variation in a characteristic of a fluid surrounding said wire causing a variation in the resonant frequency of the resonator,
**characterized in that** the heating wire has a length of between 1 and 500 µm and a transverse dimension of between 1 and 50 µm.

2. Sensor according to claim 1, in which the heating wire (1) is embedded at both ends (10a, 10b) in the support (21).

3. Sensor according to one of claims 1 to 2, in which the heating wire (1) has at least one recess (12) in the support (21), at a distance from its two ends.

4. Sensor according to one of claims 1 to 3, in which the heating wire (1) comprises a plurality of coplanar sections (1A-1D) inclined to one another.

5. Sensor according to one of claims 1 to 4, wherein the heating wire (1) comprises a semiconductor material, such as silicon, or a metal, such as platinum.

6. Sensor according to one of claims 1 to 5, in which the heating wire (1) has a thickness equal to or greater than the thickness of the resonator beam (20).

7. Sensor according to one of claims 1 to 6, in which the heating wire (1) includes through-apertures (11) distributed over at least part of its surface.

8. Sensor according to one of claims 1 to 7, in which the heating wire (1) is in the form of a network of parallel nanofilaments (10).

9. Sensor according to one of claims 1 to 8, wherein the beam (20) has a length between 1 and 100 µm and a transverse dimension between 10 and 500 nm.

10. Sensor according to one of claims 1 to 9, in which the beam (20) is made of a semiconductor material such as silicon.

11. Sensor according to the combination of claims 5 and 10, in which the beam (20) and the heating wire (1) are made in one piece from the same semiconductor material.

12. The sensor according to claim 11, in which the heating wire (1) has a doping level such that the electrical resistance of the wire (1) is greater than that of the beam (20).

13. Sensor according to one of claims 1 to 12, in which the actuator (22) is of an electrostatic type.

14. Sensor according to one of claims 1 to 13, in which the detection device comprises piezoresistive gauges (23).

15. Sensor according to one of claims 1 to 14, in which the beam (20) extends transversely to the heating wire (1).

16. Sensor according to one of claims 1 to 15, in which the surface of the junction between the beam (20) and the heating wire (1) is between 1000 and 100000 nm².

17. Sensor according to one of claims 1 to 16, in which the cross-section and the 35 material of the beam (20) and the heating wire (1) are chosen so that the resistance of the beam (20) is greater than that of the heating wire (1).

18. Sensor according to one of claims 1 to 17, wherein the junction between the beam (20) and the heating wire (1) is located in a central region of the heating wire (1).

19. Gas sensor comprising at least one heat flow sensor according to one of claims 1 to 18.

20. Gas analysis system comprising a chromatography column and at least one heat flow sensor according to one of claims 1 to 18 arranged at the outlet of said chromatography column.

21. Flowmeter comprising a heat flow sensor according to one of claims 1 to 18.
